# EUROPEAN PATENT SPECIFICATION

(11) **EP 3 779 742 B1**
(45) Date of publication and mention of the grant of the patent: **27.12.2023**
(21) Application number: 18912696.4
(22) Date of filing: 24.04.2018
(51) Int. Cl.: G06F 21/36, G06F 21/33, G06F 21/45, G07C 9/28, G06F 21/31, G07C 9/00

(54) **METHOD AND SYSTEM FOR AUTHENTICATING ELECTRONIC LOCK DEVICE BASED ON USAGE PATTERN**
VERFAHREN UND SYSTEM ZUR AUTHENTIFIZIERUNG EINER ELEKTRONISCHEN SCHLIESSVORRICHTUNG AUF DER GRUNDLAGE EINES NUTZUNGSMUSTERS
PROCÉDÉ ET SYSTÈME D'AUTHENTIFICATION DE DISPOSITIF DE SERRURE ÉLECTRONIQUE D'APRÈS UN PROFIL D'UTILISATION

(30) Priority: 30.03.2018 KR 20180037535
(43) Date of publication of application: 17.02.2021
(73) Proprietor: Kim, Bum Soo, Namyangju-si, Gyeonggi-do 12160 (KR)
(72) Inventor: Kim, Bum Soo, Namyangju-si, Gyeonggi-do 12160 (KR)
(74) Representative: Viering, Jentschura & Partner mbB Patent- und Rechtsanwälte
(86) International application number: PCT/KR2018/004711
(87) International publication number: WO 2019/189986

(56) References cited:
- JP-B2- 4 082 028
- JP-B2- 4 574 335
- KR-A- 20170 082 301
- KR-B1- 101 256 920
- KR-B1- 101 762 615
- US-A1- 2003 158 815
- US-A1- 2013 335 194
- US-B2- 9 928 500

## Description

### [Technical Field]

The present invention relates to a method for authenticating an electronic key for an electronic locking device based on a usage pattern and a system thereof, and more particularly, to a method of collecting a usage pattern using an electronic key storage box, analyzing the collected usage pattern, applying a different authentication level depending on the usage pattern to enhance security and secure usability and a system for performing the method.

### [Background Art]

Generally, doors, lockers, and facilities of public buildings, apartments, hotels, and factories are equipped with locking devices for the purpose of security. The locking device for security is divided into a mechanical locking device and an electronic locking device. The mechanical locking device which uses a key to open and close a door or a locker has a problem for a security due to manipulation or storage of the key and a problem in that when the key is lost, the locking device needs to be replaced.

In view of this, the electronic locking device which opens and closes the door using a password, a fingerprint of a user, a voice or an electronic key is frequently used. Since there is no worry of losing a key, a general user can easily open and close a door or a locker through simple authentication, and the security is excellent so that the market of the electronic locking device is rapidly growing in recent years.

However, when the authentication information of the user which is used to open and close the electronic locking device is leaked, that is, when a person who is not authorized to open and close the electronic locking device knows the authentication information, a trespassing problem may occur. Therefore, it is necessary to develop a technique to perform dual authentication in order to relieve the user's anxiety about the opening/closing of the electronic locking device.

To this end, in addition to an electronic locking device such as a general door lock which is opened/closed through simple user authentication, an electronic locking device using a small electronic key is being developed. As the related art, KR 10 2016 0147553 A describes an electronic locking device dual authentication system using electronic key. Various further electronic locking devices are described in US 2003/158815 A1 and KR 101 762 615 B1.

For example, in the case of a weapon storage box of the military or a facility box of a base station of each communication service provider, the volume is insufficient to install an electronic locking device such as a door lock which is unlocked only by the user authentication and security issues are important in some cases. In this case, additional authentication beyond simple password or fingerprint input may be necessary.

Further, when the electronic devices such as door locks are installed in a plurality of locations, there may be a problem in that a power source of the locking device installed in each location needs to be periodically exchanged. In order to solve such a problem, an electronic locking device which does not have the power source and supplies the power through a small electronic key to unlock the locking device while the plurality of locking devices is unlocked using one small electronic key with 1:n relationship has been developed.

However, as disclosed in KR 1020160147553 A introduced above, the dual authentication using the primary authentication using password data generated in accordance with input of a button equipped in the small electronic key and the secondary authentication of performing the authentication both the electronic key and the locking device based on UIDs enhances the security as compared with the electronic locking device such as a door lock which does not have a key, but has some problems.

As a first problem, since the dual authentication is always applied in the same way, even when it is necessary to enhance the user's convenience, it is inconvenient because the password is primarily authenticated through the key pad input and the electronic key is secondarily authenticated by contacting the electronic key to the locking device.

As a second problem, to the contrary, even when the security needs to be enhanced, the dual authentication is always applied so that it is difficult to separately perform the additional authentication. That is, there may be a situation when the security through the dual authentication is insufficient.

In order to solve the above-mentioned problems, an authentication method which is capable of applying various authentication levels depending on a situation, in the dual authentication method of the electronic locking device using an electronic key of the related art is necessary.

### [Disclosure]

### [Technical Problem]

An object to be achieved by the present invention is to provide an authentication method and a system of an electronic key for an electronic locking device based on a usage pattern. According to the present invention, an authentication method defined in claim 1 and an authentication system in claim 9 are provided.

### [Technical Solution]

The authentication method for an electronic locking device according to the invention is according to claim 1.

Desirably, the generating of a usage pattern may include: analyzing the usage pattern using one or more of a usage time and a usage location included in the usage history.

Desirably, the analyzing of a usage pattern may include: calculating a normal distribution of the number of usages at every usage time using the number of locks at every usage time; and selecting the authentication level in accordance with an average and a standard deviation of the normal distribution.

Desirably, the analyzing of a usage pattern may include: calculating a normal distribution of the number of usages at every usage location using the number of locks at every location; and selecting the authentication level in accordance with an average and a standard deviation of the normal distribution.

Desirably, the selecting of an authentication level may include: selecting a first authentication level when the number of usages is equal to or larger than an average of the normal distribution - 1 * standard deviation; selecting a second authentication level which is higher than the first authentication level when the number of usages is equal to or larger than an average of the normal distribution - 2 * standard deviation and smaller than an average of the normal distribution - 1 * standard deviation; and selecting a third authentication level which is higher than the second authentication level when the number of usages is equal to or larger than an average of the normal distribution - 3 * standard deviation and smaller than an average of the normal distribution - 2 * standard deviation.

Desirably, the analyzing of a usage pattern may include: clustering a usage history according to the location and the time; and applying different authentication levels according to the location and the time in a clustered cluster.

Desirably, the clustering of a usage history according to the location and the time may include: performing K-means clustering in accordance with the number of authentication levels.

Desirably, the applying of different authentication levels may include: applying an authentication level having a high security to a location and a time in the cluster as the number of usage histories in the cluster is smaller.

The authentication system for an electronic locking device according to the invention is according to claim 9.

Desirably, the usage pattern analyzing device may include: an accommodating unit which accommodates the electronic key; a charging unit which charges the electronic key when the electronic key is accommodated; a communication unit which receives a usage history from the electronic key and transmits a usage pattern generated based on the received usage history to the electronic key; and a learning unit which learns the usage pattern based on the received usage history.

### [Advantageous Effects]

Effects according to the present invention are as follows:
When the authentication method proposed in the present invention is used, an appropriate authentication level may be applied in accordance with the situation. By doing this, a different authentication level may be applied to a case when the convenience of the user needs to be enhanced and a case when the security of the locking device needs to be enhanced.

Generally, the user's convenience and the security of the locking device form a trade-off relationship, but when the method proposed by the present invention is used, both the user's convenience and the security of the locking device can be ensured.

Further, when a plurality of keys needs to be stored, an electronic key storage box is used to systematically manage the electronic keys and the electronic key may be easily charged or the key usage history may be easily collected during this process.

### [Description of Drawings]

FIG. 1 is a view for explaining an electronic locking device and an electronic key used in an exemplary embodiment of the present invention.
FIG. 2 is a diagram of an authentication system of an electronic key for an electronic locking device based on a usage pattern according to an exemplary embodiment of the present invention.
FIG. 3 is a flowchart of a signal of an authentication system of an electronic key for an electronic locking device based on a usage pattern according to an exemplary embodiment of the present invention.
FIGS. 4 to 8 are views explaining an authentication method according to an exemplary embodiment of the present invention.
FIG. 9 is a flowchart of an authentication method of an electronic key for an electronic locking device based on a usage pattern according to an exemplary embodiment of the present invention.
FIG. 10 is a view for explaining a usage pattern analyzing device according to an exemplary embodiment of the present invention.

### [Best Mode]

Those skilled in the art may make various modifications to the present invention and the present invention may have various embodiments thereof, and thus specific embodiments will be illustrated in the drawings and described in detail in detailed description. In the description of respective drawings, similar reference numerals designate similar elements.

Terms such as first, second, A, or B may be used to describe various components but the components are not limited by the above terms. The above terms are used only to discriminate one component from the other component. For example, without departing from the scope of the present invention, a first component may be referred to as a second component, and similarly, a second component may be referred to as a first component. A term of and/or includes a combination of a plurality of related elements or any one of the plurality of related elements.

It should be understood that, when it is described that an element is "coupled" or "connected" to another element, the element may be directly coupled or directly connected to the other element or coupled or connected to the other element through a third element. In contrast, when it is described that an element is "directly coupled" or "directly connected" to another element, it should be understood that no element is present therebetween.

Terms used in the present application are used only to describe a specific exemplary embodiment, but are not intended to limit the present invention. A singular form may include a plural form if there is no clearly opposite meaning in the context. In the present application, it should be understood that term "include" or "have" indicates that a feature, a number, a step, an operation, a component, a part or the combination thoseof described in the specification is present, but do not exclude a possibility of presence or addition of one or more other features, numbers, steps, operations, components, parts or combinations, in advance.

If it is not contrarily defined, all terms used herein including technological or scientific terms have the same meaning as those generally understood by a person with ordinary skill in the art. Terms defined in generally used dictionary shall be construed that they have meanings matching those in the context of a related art, and shall not be construed in ideal or excessively formal meanings unless they are clearly defined in the present application.

Hereinafter, exemplary embodiments according to the present invention will be described in detail with reference to accompanying drawings.

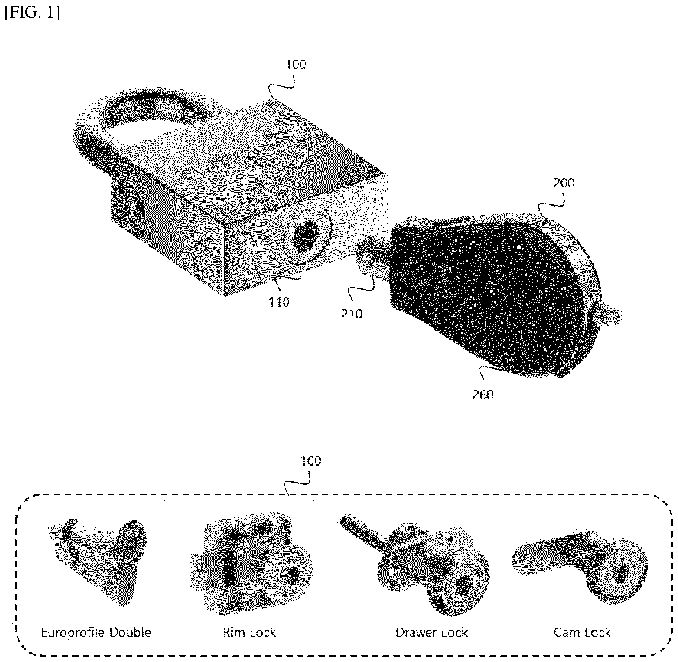

FIG. 1 is a view for explaining an electronic locking device and an electronic key used in an exemplary embodiment of the present invention.

Referring to FIG. 1, an electronic locking device 100 is illustrated as a pad lock and the electronic key 200 includes a power button and four key pads 260.

However, this is just an example for easy understanding of the present invention and as the electronic locking device 100 used in the present invention, in addition to the pad lock, all locking devices used for a drawer, a cabinet, or a storage box, such as an Europrofile double, a rim lock, a drawer lock, and a cam lock may be used as illustrated in a lower portion of FIG. 1.

The electronic locking device 100 does not have a separate power source and is temporally supplied with the power from a connecting terminal 210 of the electronic key 200, thereby unlocking the electronic locking device 100. In this case, the connecting terminal 110 of the electronic locking device 100 and the connecting terminal 210 of the electronic key 200 not only supply the power by physically contacting with each other, but also perform the primary authentication by exchanging identifiers UIDs.

By doing this, the plurality of electronic locking devices 100 may be locked and unlocked with one electronic key 200. That is, in an internal memory of the electronic locking device 100, a list of identifiers of the electronic key 200 which locks and unlocks the electronic locking device is stored. Further, in an internal memory of the electronic key 200, a list of identifiers of the electronic locking devices 100 to be locked and unlocked by the electronic key 200 is stored. Therefore, the primary authentication may be performed by contacting the connecting terminals 110 and 210 with each other.

Since the possession of the electronic key 200 is one of authentication, the higher security than an existing electronic locking device such as a door lock which simply inputs a password may be maintained. Specifically, since such a small electronic locking device has a small volume and needs to be installed in a plurality of locations, it is very effective that no power source is provided in the electronic locking device 100 but the power is supplied from the electronic key 200 to unlock the electronic locking device 100.

In this case, in order to enhance the security, a secondary authentication unit may be added to the electronic key 200. In FIG. 1, four key pads 260 are attached to the electronic key 200 and the secondary authentication is performed by the key pad 260. For example, numbers such as 1, 2, 3, and 4 are printed on the key pad 260 and the secondary authentication may be performed by the combination of the numbers.

In order to unlock with the electronic key 200, the user presses the power button of the electronic key 200 to turn on the electronic key 200 and then inputs a predetermined password in the key pad 260. The dual authentication may be performed such that when the password input by the user is the same as the password stored in the internal memory of the electronic key 200, it is notified that the secondary authentication using the password is succeeded through a sound or a lamp and then the user contacts the electronic key 200 to the electronic locking device 100 to unlock the electronic locking device.

Although in FIG. 1, the key pad 260 is illustrated to help the understanding of the present invention, a fingerprint sensor is added to the electronic key 200 and the authentication which utilizes biometric information may be performed using a fingerprint of the user. In addition, various sensors are added to the electronic key 200 and the dual authentication may be performed using the various sensors.

However, due to the restriction of the volume of the electronic key 200, a computational capability is restricted and it is limited to add the sensor. Therefore, a communication module such as Bluetooth may be added to the electronic key 200. Further, the electronic key 200 may perform the dual authentication using an external device while communicating with the external device such as a smart phone.

For example, the user is authenticated through face recognition using a camera or voice recognition using a microphone in a smart phone and only when the secondary authentication is succeeded, information notifying that the authentication is succeeded is transmitted from the smart phone to the electronic key 200. Next, the dual authentication may be performed by a method of performing the authentication by contacting the electronic key 200 to the electronic locking device 100.

As compared with the electronic locking device such as a door lock which simply performs the authentication using a password, the dual authentication of the electronic locking device 100 using the electronic key 200 has an advantage in that the security is enhanced. However, there is a disadvantage in that uniform application of the dual authentication is inappropriate when it is desired to enhance the security or when it is desired to enhance the user's convenience even if the security is slightly reduced.

In order to solve the disadvantage of the related art, the present invention proposes a method for dynamically applying an authentication level to lock/unlock the electronic locking device using a small electronic key 200. To this end, it is necessary to analyze a usage pattern of the electronic locking device 100 first.

That is, a different authentication level is applied by automatically distinguishing whether it is desired to enhance the security or it is desired to enhance the convenience depending on a normal usage type, thereby proposing an authentication method which secures both the security and the convenience which are in a trade-off relationship.

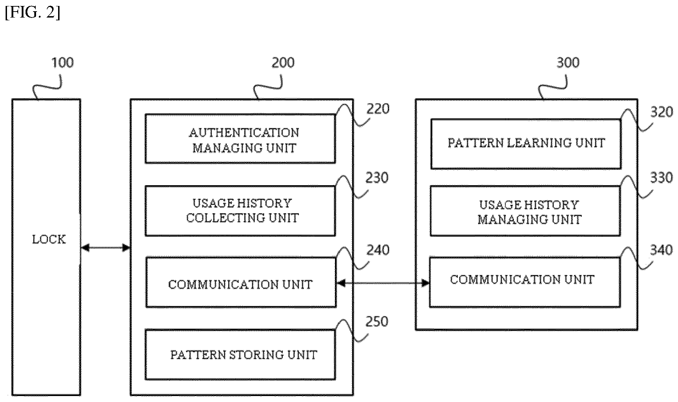

FIG. 2 is a diagram of an authentication system of an electronic key for an electronic locking device based on a usage pattern according to an exemplary embodiment of the present invention.

The authentication system proposed by the present invention includes an electronic locking device 100, an electronic key 200, and a usage pattern analyzing device 300. Here, the usage pattern analyzing device 300 is a device which collects a usage history by wirely or wirelessly communicating with the electronic key 200 and transmits a pattern which is analyzed based on the collected usage history to the electronic key 200.

For the purpose of easy understanding of the present invention, although it is described that the usage pattern analyzing device 300 is assumed to be one physical device, the present invention is not limited thereto and a plurality of devices may be combined to serve as a usage pattern analyzing device 300.

For example, when a smart phone receives the usage history from the electronic key 200 through the Bluetooth and transmits the usage history to a remote server through WiFi or LTE, the server analyzes the usage history and generates a pattern to transmit the pattern to the electronic key 200 through the smart phone. In this case, the smart phone and the server are combined to serve as the usage pattern analyzing device 300.

As described above, the electronic locking device 100 and the electronic key 200 exchange the power and the information through physical contact and the electronic key 200 and the usage pattern analyzing device 300 exchange the usage history and the pattern through the wired/wireless communication.

Here, the usage history refers to a history that the electronic key 200 locks and unlocks the electronic locking device 100 and includes information such as a time and a location. A usage history collecting unit 230 of the electronic key 200 collects a usage history in an internal memory whenever the electronic locking device 100 is locked or unlocked.

The usage history collected as described above is periodically or aperiodically transmitted to a communication unit 340 of the usage pattern analyzing device 300 through a communication unit 240 of the electronic key 200 and a usage history managing unit 330 of the usage pattern analyzing device 300 stores the usage history in an internal database.

When a predetermined amount of usage histories is collected, the usage pattern analyzing device 300 analyzes the usage histories and extracts a pattern. During this process, an analyzing method such as machine learning may be applied. A pattern which is generated through learning by a pattern learning unit 320 of the usage pattern analyzing device 300 is transmitted to the electronic key 200 again.

The pattern is stored in the internal memory of the electronic key 200 by a pattern storing unit 250 of the electronic key 200. An authentication managing unit 220 of the electronic key 200 dynamically applies an authentication level to be applied to lock/unlock the electronic locking device 100 in accordance with the pattern to perform the authentication at various levels.

By doing, in some cases, the electronic locking device 100 is unlocked only by the authentication performed by contacting the electronic key 200 to the electronic locking device 100 and in another case, the authentication such as a password is further performed in addition to the physical contact. Further, in the other cases, all the physical contact, password authentication, and fingerprint authentication may be requested.

Hereinafter, for the purpose of easy understanding of the present invention, it is assumed that the electronic key 200 includes a key pad and a fingerprint sensor. Further, authentication which is performed by the physical contact of the electronic key 200 and the electronic locking device 100 is referred to as one-step authentication, dual authentication which authenticates the physical contact and the password is referred to as two-step authentication, and triple authentication which authenticates physical contact, the password, and the fingerprint is referred to as three-step authentication.

The electronic key 200 may further include various authentication units and the authentication level may be increased depending on how many authentication units are used. However, for the purpose of easy understanding of the present invention, it is assumed that there are only three levels of the authentication levels and the description will be continued. Generally, the one-step authentication has the highest convenience but the lowest security and the three-step authentication has the lowest convenience but the highest security. The two-step authentication has a medium level of convenience and security.

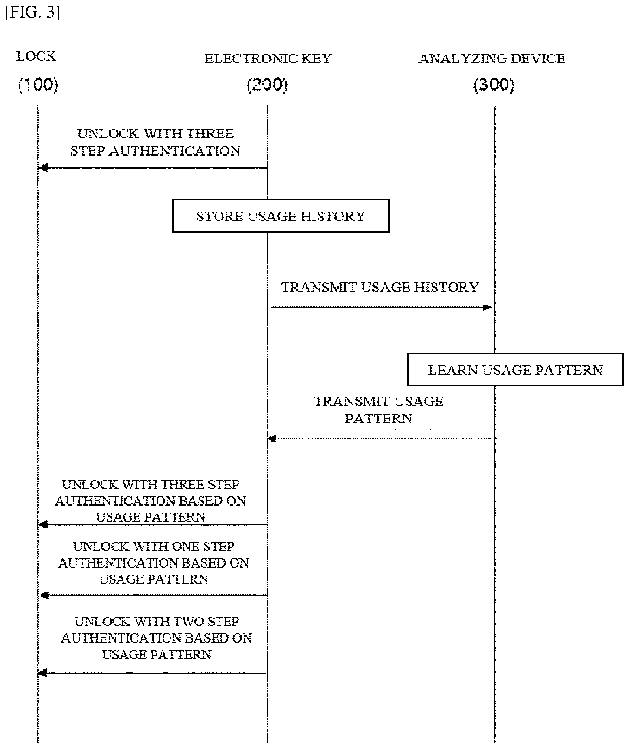

FIG. 3 is a flowchart of a signal of an authentication system of an electronic key for an electronic locking device based on a usage pattern according to an exemplary embodiment of the present invention.

Referring to FIG. 3, before collecting the usage history and analyzing the pattern, the electronic key 200 unlocks the electronic locking device 100 through the three-step authentication having the highest security. When the usage history is accumulated and collected through the three-step authentication, the electronic key 200 transmits the usage history to the usage pattern analyzing device 300.

Thereafter, the usage pattern analyzing device 300 learns the usage pattern and transmits the analyzed usage pattern to the electronic key 200. By doing this, even though the same electronic locking device 100 is unlocked in accordance with individual situations, depending on the usage pattern, the electronic key 200 may apply various authentication levels.

For example, various authentication levels such as the one-step authentication, two-step authentication, and three-step authentication are applied depending on the time or location for unlocking so that both the security and the convenience may be ensured. Specifically, the authentication level is not adjusted by the setting of a manager, but the authentication level is applied in accordance with the usage pattern, so that the security and the convenience may be more effectively ensured.

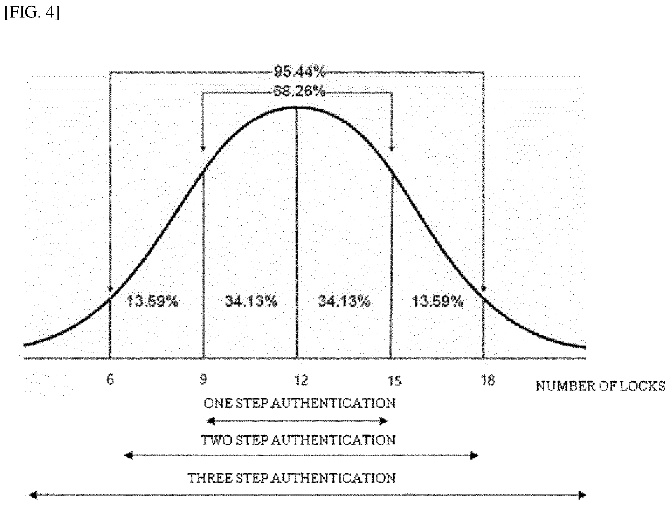

FIGS. 4 to 8 are views explaining an authentication method according to an exemplary embodiment of the present invention.

As described above, the usage history includes a usage time, a usage location, and an identifier of the electronic locking device 100 and an identifier of the electronic key 200 at that time. For example, it is assumed that when the number of locks is calculated at each time period over several days and the distribution is plotted, a normal distribution as illustrated in FIG. 4 is obtained.

Referring to FIG. 4, it is understood that an average of the number of locks at each time period is 12 and a standard deviation (σ) is 3. Therefore, in accordance with the characteristic of the normal distribution, in the range of an average +/- 1σ, approximately 68.26% of the entire samples is included, in the range of an average +/-2σ, approximately 95.44% of the entire samples is included, and in the range of an average +/- 3σ, approximately 99.73% of the entire samples is included.

By doing this, the authentication level may be automatically allocated based on the standard deviation. For example, when the number of locks at every time period is 0 to 6, the three-step authentication is required to ensure the high security and when the number of locks at every time period is 6 to 9, the two-step authentication is required so that as the number of locks is increased, the user's convenience may be enhanced. Finally, when the number of locks exceeds nine at every time period, the one-step authentication is required to ensure the user's convenience.

As the number of locks is increased, the unlocking is performed with the lower authentication because most of the malicious attempts to unlock the physical locking device is tried at a time period when the usage is not frequent. The various authentication levels may be applied so as to ensure the high convenience when the usage of the user is frequent and ensure the high security when the usage of the user is infrequent.

That is, since it is difficult to unlock maliciously by others while the user frequently tries to use the locking device, patterns may be learned to enhance user's convenience during this time period. To the contrary, at the time period when the usage of the user is infrequent, the security is enhanced to request a high level of authentication.

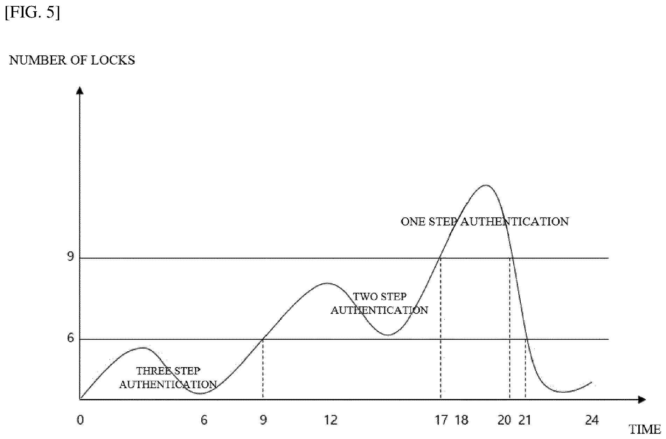

Referring to FIG. 5, as a specific example, the number of locks at each time period from 00:00 to 24:00 on a specific date. By doing this, the three-step authentication may be performed from 00:00 to 09:00 when the number of locks is less than six, using the pattern learned in FIG. 4.

As compared with this, the two-step authentication may be performed from 09:00 to 17:00 when the number of locks is six or more and less than nine. In contrast, the one-step authentication may be performed from 17:00 to 20:00 when the number of locks is nine or more.

Further, the two-step authentication is performed from 20:00 to 21:00 when the usage of the user is reduced and the three-step authentication is performed after 21:00 to ensure the security. As described above, the pattern is generated by analyzing the usage history and various security levels are applied in accordance with the pattern so that not only the user's convenience is enhanced but also the security may be ensured.

For now, an example that the number of locks at every time period is analyzed as a pattern has been described with reference to FIGS. 4 and 5. However, this example is provided for easy understanding of the present invention, but does not limit the invention so that a difference of the authentication level in accordance with the usage pattern of the user may be automatically set through various pattern analysis, in addition to the pattern analysis illustrated in FIGS. 4 and 5.

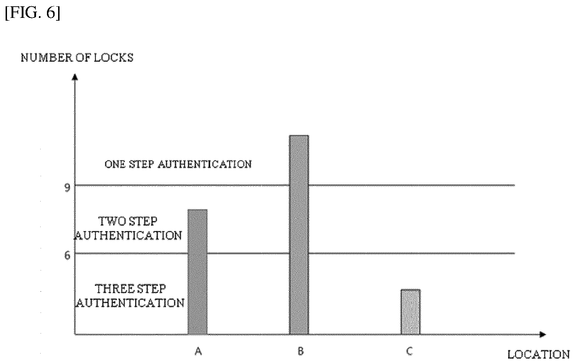

Now, an example of analyzing the number of locks at every location as a pattern will be described with reference to FIG. 6. Referring to FIG. 6, the number of locks is illustrated at every location. For example, the electronic locking device 100 used in the present invention is a locking device for a storage box in a factory facility so that it is assumed that the locations of the locking devices vary depending on every area of the factory.

It is assumed that a locking device in a section A is generally locked/unlocked eight times for one day, a locking device in a section B is generally locked/unlocked twelve times for one day, and a locking device in a section C is generally locked/unlocked four times for one day.

Therefore, different authentication levels may be applied for every section. That is, two-step authentication is performed for the locking device in the section A, one-step authentication is performed for the locking device in the section B, and three-step authentication is performed for the locking device in the section C.

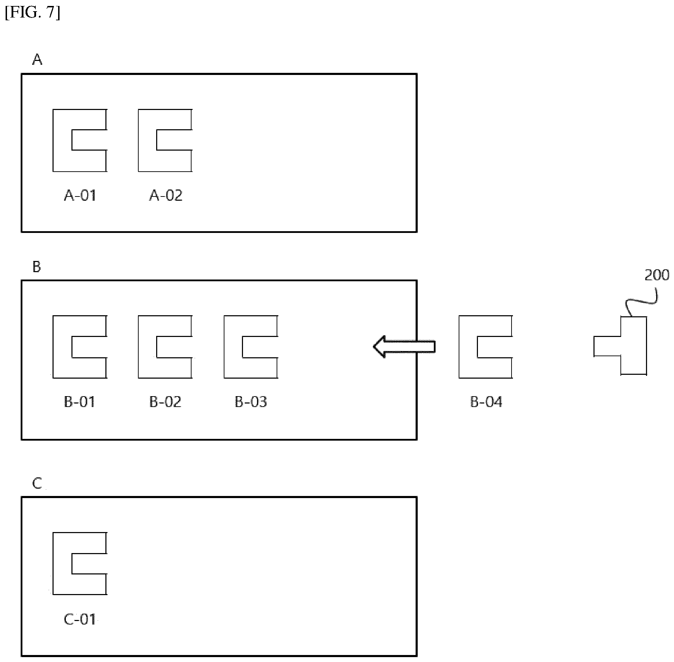

As described above, similarly to the pattern at every time period, when the pattern is analyzed for every location to apply an authentication level, as illustrated in FIG. 7, even though a new locking device B-04 is added to the section B and there is no usage history for the locking device B-04, the electronic key 200 may automatically set to perform only the one-step authentication to lock or unlock the locking device B-40.

Similarly to the application in FIG. 4, the average and the standard deviation are calculated using the statistics of the number of locks for every location and different authentication levels may be set and applied to individual locations based on the range of the number of locks in each section based on the average.

Further, the times and locations described in FIGS. 4 to 7 are analyzed at one time to generate a usage pattern according to the time and the location. Therefore, different authentication levels may be applied even to the same location depending on the time and different authentication levels may be applied to the same time depending on the locations.

During this process, the normal distributions for every location and every time are obtained and different authentication levels may be applied according to the normal distributions. Further, the machine learning may be used during this process. For example, the usage history is clustered with characteristics of the usage location and the usage time to configure a cluster and the authentication level may be applied in the descending order of cluster size.

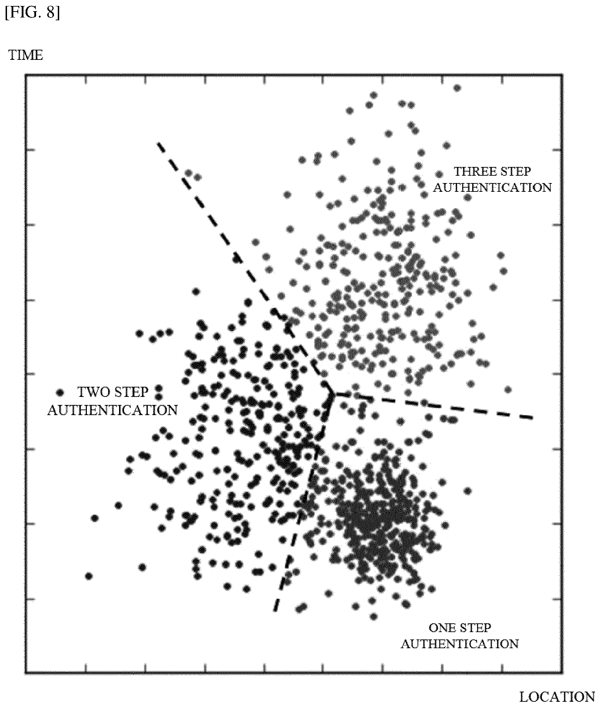

Referring to FIG. 8, the usage according to the location and the time is represented and a result of clustering the usage is illustrated. In this case, there are three authentication levels including one step, two steps, and three steps so that the clustering is performed by assuming that a value of K to perform K means clustering is 3.

Therefore, one-step authentication is performed for the location and the time in the red cluster where the usage is concentrated, two-step authentication is performed for the location and the time in the blue cluster, and three-step authentication is performed for the location and the time in the green cluster. The setting to apply various authentication levels is applied using a model generated through machine learning so that an appropriate authentication level according to the location and the time may be set.

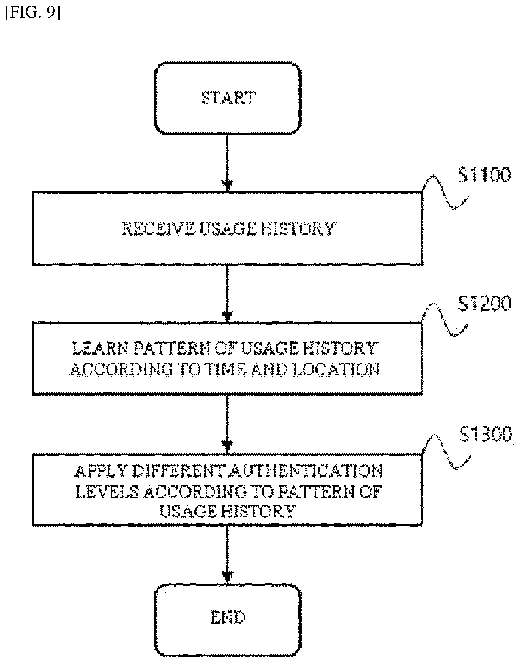

FIG. 9 is a flowchart of an authentication method of an electronic key for an electronic locking device based on a usage pattern according to an exemplary embodiment of the present invention.

Referring to FIG. 9, first, a usage history is received from an electronic key 200 in step S1100. Next, the usage history is analyzed to learn a pattern according to a time and a location in step S1200. In this case, various machine learning methods may be applied. More specifically, the pattern may be learned by applying unsupervised learning.

Next, different authentication levels are applied in accordance with the learned pattern in step S1300. That is, various authentication levels are applied according to the location and the time so that the electronic key 200 and the electronic locking device 100 may be used to ensure the security and the convenience.

In this case, the learned pattern may be updated using the usage histories which are consistently accumulated. By doing this, more appropriate authentication level according to the location and the time may be automatically set.

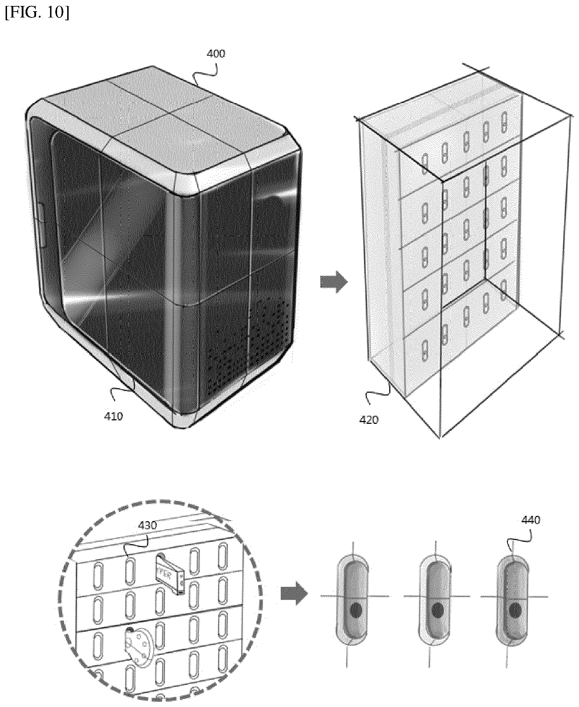

FIG. 10 is a view for explaining a usage pattern analyzing device according to an exemplary embodiment of the present invention.

The usage pattern analyzing device 300 described above may be a type of a server which collects the usage history by communicating with the electronic key, but may be a type of an electronic key storage box 400 as illustrated in FIG. 10.

Referring to FIG. 10, the electronic key storage box 400 may include a door 410 to be opened/closed and an accommodating space 420 therein. In the accommodating space 420, there are key holes 430 for accommodating a plurality of electronic keys 100 so that the electronic keys 100 are inserted into individual holes, thereby storing the electronic keys 100.

In this case, a state display unit 440 may be included at the circumference of the key hole 430. Therefore, when the electronic key 100 is being charged, is completely charged, and reads/writes data, the individual states may be notified to the user using colors.

As described above, during the process of accommodating and storing the electronic key 100, the key storage box 400 not only provides a charging function, but also performs a function of collecting a usage history of the electronic key 100, learning models for applying various authentication levels by analyzing the usage history, and transmitting the learned model to the electronic key 100.

By doing this, when it is necessary to store a plurality of keys, the electronic key storage box 400 is used to systematically manage the electronic keys 100 and charging and usage contents of the electronic key 100 may be easily collected during this process.

The exemplary embodiments of the present disclosure have been described with reference to the accompanying drawings.

## Claims

1. An authentication method for an electronic locking device (100), comprising:
collecting a usage history (S1100) of locking and unlocking an electronic locking device (100) by an electronic key (200);
transmitting, by the electronic key, the usage history to a usage pattern analyzing device (300);
generating, by the usage pattern analyzing device (300), a usage pattern (S 1200) by analyzing the usage history;
transmitting, by the usage pattern analyzing device (300), the generated usage pattern to the electronic key (200); and
performing, by the electronic key (200), authentication (S1300) by applying one authentication level, among different authentication levels comprising a one-step authentication, a two-step authentication, and a three-step authentication, the authentication level being selected based on the usage pattern when the electronic locking device (100) is to be locked and unlocked using the electronic key (200);
wherein the electronic locking device (100) is configured to be temporally supplied with power from a connecting terminal of the electronic key (200) to a connecting terminal of the electronic locking device (100); and
all authentication levels comprise the one-step authentication being performed by exchanging identifiers (UIDs) by physically contacting the connecting terminal of the electronic key (200) and the connecting terminal of the electronic locking device (100).

2. The authentication method for an electronic locking device (100) of claim 1, wherein the generating of a usage pattern includes:
analyzing the usage pattern using one or more of a usage time and a usage location included in the usage history.

3. The authentication method for an electronic locking device (100) of claim 2, wherein the analyzing of a usage pattern includes:
calculating a normal distribution of the number of usages at every usage time using the number of locks at every usage time; and
selecting the authentication level in accordance with an average and a standard deviation of the normal distribution.

4. The authentication method for an electronic locking device (100) of claim 2, wherein the analyzing of a usage pattern includes:
calculating a normal distribution of the number of usages at every usage location using the number of locks at every location; and
selecting the authentication level in accordance with an average and a standard deviation of the normal distribution.

5. The authentication method for an electronic locking device (100) of any one of claims 3 and 4, wherein the selecting of an authentication level includes:
selecting a first authentication level when the number of usages is equal to or larger than an average of the normal distribution - 1 * standard deviation;
selecting a second authentication level which is higher than the first authentication level when the number of usages is equal to or larger than an average of the normal distribution - 2 * standard deviation and smaller than an average of the normal distribution - 1 * standard deviation; and
selecting a third authentication level which is higher than the second authentication level when the number of usages is equal to or larger than an average of the normal distribution - 3 * standard deviation and smaller than an average of the normal distribution - 2 * standard deviation.

6. The authentication method for an electronic locking device (100) of claim 2, wherein the analyzing of a usage pattern includes:
clustering a usage history according to the location and the time; and
applying different authentication levels according to the location and the time in a clustered cluster.

7. The authentication method for an electronic locking device (100) of claim 6, wherein the clustering of a usage history according to the location and the time includes:
performing K-means clustering in accordance with the number of authentication levels.

8. The authentication method for an electronic locking device (100) of claim 6, wherein the applying of different authentication levels includes:
applying an authentication level having a high security to a location and a time in the cluster as the number of usage histories in the cluster is smaller.

9. An authentication system for an electronic locking device (100), comprising an electronic locking device (100), an electronic key (200), and a usage pattern analyzing device (300), wherein:
the electronic key (200) is configured to collect usage history of locking and unlocking the electronic locking device (100), and to transmit the usage history to the usage pattern analyzing device (300),
the usage pattern analyzing device (300) is configured to analyze the received usage history, to generate a usage pattern as a result of the analysis, and to transmit the generated usage pattern to the electronic key (200),
the electronic key (200) is configured to receive the usage pattern, and to apply an authentication level selected among different authentication levels based on the usage pattern to perform authentication, wherein the authentication levels include a one-step authentication, a two-step authentication, and a three-step authentication,
wherein the electronic locking device (100) is configured to be temporally supplied with power from a connecting terminal of the electronic key (200) to a connecting terminal of the electronic locking device (100); and
wherein all authentication levels comprise the one-step authentication, the one-step authentication being performed by exchanging identifiers (UIDs) by physically contacting the connecting terminal of the electronic key (200) and the connecting terminal of the electronic locking device (100).

10. The authentication system for an electronic locking device (100) of claim 9, wherein the usage pattern analyzing device (300) includes:
an accommodating unit configured to accommodate the electronic key (200);
a charging unit configured to charge the electronic key (200) when the electronic key (200) is accommodated;
a communication unit (340) configured to receive a usage history from the electronic key (200) and
transmits a usage pattern generated based on the received usage history to the electronic key (200); and
a learning unit (320) configured to learn in the usage pattern based on the received usage history.

## Patentansprüche

1. Authentifizierungsverfahren für eine elektronische Verriegelungsvorrichtung (100), aufweisend:
Sammeln einer Nutzungshistorie (S1100) des Verriegelns und Entriegelns einer elektronischen Verriegelungsvorrichtung (100) durch einen elektronischen Schlüssel (200),
Übertragen der Nutzungshistorie durch den elektronischen Schlüssel an eine Nutzungsmuster-Analysevorrichtung (300),
Erzeugen eines Nutzungsmusters (S1200) durch die Nutzungsmuster-Analysevorrichtung (300) durch Analysieren der Nutzungshistorie Übertragen des erzeugten Nutzungsmusters an den elektronischen Schlüssel (200) durch die Nutzungsmuster-Analysevorrichtung (300) und
Durchführen einer Authentifizierung (S1300) durch den elektronischen Schlüssel (200) durch Anwenden eines Authentifizierungsniveaus aus verschiedenen Authentifizierungsniveaus, die eine einstufige Authentifizierung, eine zweistufige Authentifizierung und eine dreistufige Authentifizierung aufweisen, wobei das Authentifizierungsniveau auf der Grundlage des Nutzungsmusters ausgewählt ist, wenn die elektronische Verriegelungsvorrichtung (100) unter Verwendung des elektronischen Schlüssels (200) verriegelt und entriegelt werden soll,
wobei die elektronische Verriegelungsvorrichtung (100) so konfiguriert ist, dass sie zeitweise von einem Verbindungsanschluss des elektronischen Schlüssels (200) zu einem Verbindungsanschluss der elektronischen Verriegelungsvorrichtung (100) mit Leistung versorgt wird, und
alle Authentifizierungsniveaus die einstufige Authentifizierung aufweisen, die durch Austausch von Identifikatoren (UIDs) durch physisches Kontaktieren des Verbindungsanschlusses des elektronischen Schlüssels (200) und des Verbindungsanschlusses der elektronischen Verriegelungsvorrichtung (100) durchgeführt wird.

2. Authentifizierungsverfahren für eine elektronische Verriegelungsvorrichtung (100) nach Anspruch 1, wobei das Erzeugen eines Nutzungsmusters aufweist:
Analysieren des Nutzungsmusters unter Verwendung einer Nutzungszeit und/oder eines Nutzungsortes, die in der Nutzungshistorie enthalten sind.

3. Authentifizierungsverfahren für eine elektronische Verriegelungsvorrichtung (100) nach Anspruch 2, wobei das Analysieren eines Nutzungsmusters aufweist:
Berechnen einer Normalverteilung der Anzahl der Nutzungen zu jedem Nutzungszeitpunkt unter Verwendung der Anzahl der Verrigelungen zu jedem Nutzungszeitpunkt und
Auswählen des Authentifizierungsniveaus gemäß einem Durchschnitt und einer Standardabweichung der Normalverteilung.

4. Authentifizierungsverfahren für eine elektronische Verriegelungsvorrichtung (100) nach Anspruch 2, wobei das Analysieren eines Nutzungsmusters aufweist:
Berechnen einer Normalverteilung der Anzahl der Nutzungen an jedem Nutzungsort unter Verwendung der Anzahl der Verriegelungen an jedem Ort und
Auswählen des Authentifizierungsniveaus gemäß einem Durchschnitt und einer Standardabweichung der Normalverteilung.

5. Authentifizierungsverfahren für eine elektronische Verriegelungsvorrichtung (100) nach einem der Ansprüche 3 und 4, wobei das Auswählen eines Authentifizierungsniveaus aufweist:
Auswählen eines ersten Authentifizierungsniveaus, wenn die Anzahl der Nutzungen gleich oder größer ist als ein Durchschnitt der Normalverteilung - 1 * Standardabweichung,
Auswählen eines zweiten Authentifizierungsniveaus, das höher als das erste Authentifizierungsniveau ist, wenn die Anzahl der Nutzungen gleich oder größer als ein Durchschnitt der Normalverteilung - 2 * Standardabweichung und kleiner als ein Durchschnitt der Normalverteilung - 1 * Standardabweichung ist, und
Auswählen eines dritten Authentifizierungsniveaus, das höher ist als das zweite Authentifizierungsniveau, wenn die Anzahl der Nutzungen gleich oder größer ist als ein Durchschnitt der Normalverteilung - 3 * Standardabweichung und kleiner ist als ein Durchschnitt der Normalverteilung - 2 * Standardabweichung.

6. Authentifizierungsverfahren für eine elektronische Verriegelungsvorrichtung (100) nach Anspruch 2, wobei das Analysieren eines Nutzungsmusters aufweist:
Clustern einer Nutzungshistorie gemäß dem Ort und der Zeit und
Anwenden unterschiedlicher Authentifizierungsniveaus gemäß dem Ort und der Zeit in einem geclusterten Cluster.

7. Authentifizierungsverfahren für eine elektronische Verriegelungsvorrichtung (100) nach Anspruch 6, wobei das Clustern einer Nutzungshistorie gemäß dem Ort und der Zeit aufweist:
Durchführen von K-Means-Clustering gemäß der Anzahl der
Authentifizierungsniveaus.

8. Authentifizierungsverfahren für eine elektronische Verriegelungsvorrichtung (100) nach Anspruch 6, wobei das Anwenden verschiedener Authentifizierungsniveaus aufweist:
Anwenden eines Authentifizierungsniveaus, das eine hohe Sicherheit aufweist, auf einen Ort und eine Zeit in dem Cluster, wenn die Anzahl der Nutzungshistorien in dem Cluster kleiner ist.

9. Authentifizierungssystem für eine elektronische Verriegelungsvorrichtung (100), das eine elektronische Verriegelungsvorrichtung (100), einen elektronischen Schlüssel (200) und eine Nutzungsmuster-Analysevorrichtung (300) aufweist, wobei:
der elektronische Schlüssel (200) so konfiguriert ist, dass er eine Nutzungshistorie des Verriegelns und Entriegelns der elektronischen Verriegelungsvorrichtung (100) sammelt und die Nutzungshistorie an die Nutzungsmuster-Analysevorrichtung (300) überträgt,
die Nutzungsmuster-Analysevorrichtung (300) konfiguriert ist, um die empfangene Nutzungshistorie zu analysieren, um ein Nutzungsmuster als ein Ergebnis der Analyse zu erzeugen und um das erzeugte Nutzungsmuster an den elektronischen Schlüssel (200) zu übertragen,
der elektronische Schlüssel (200) so konfiguriert ist, dass er das Nutzungsmuster empfängt und ein Authentifizierungsniveau anwendet, das aus verschiedenen Authentifizierungsniveaus auf der Grundlage des Nutzungsmusters ausgewählt ist, um eine Authentifizierung durchzuführen, wobei die Authentifizierungsniveaus eine einstufige Authentifizierung, eine zweistufige Authentifizierung und eine dreistufige Authentifizierung aufweisen,
wobei die elektronische Verriegelungsvorrichtung (100) so konfiguriert ist, dass sie zeitweise von einem Verbindungsanschluss des elektronischen Schlüssels (200) zu einem Verbindungsanschluss der elektronischen Verriegelungsvorrichtung (100) mit Leistung versorgt wird, und
wobei alle Authentifizierungsniveaus die einstufige Authentifizierung aufweisen,
wobei die einstufige Authentifizierung durch den Austausch von Identifikatoren (UIDs) durch physisches Kontaktieren des Verbindungsanschlusses des elektronischen Schlüssels (200) und des Verbindungsanschlusses der elektronischen Verriegelungsvorrichtung (100) durchgeführt wird.

10. Authentifizierungssystem für eine elektronische Verriegelungsvorrichtung (100) nach Anspruch 9, wobei die Nutzungsmuster-Analysevorrichtung (300) aufweist:
eine Aufnahmeeinheit, die dazu eingerichtet ist, den elektronischen Schlüssel (200) aufzunehmen,
eine Ladeeinheit, die dazu eingerichtet ist, den elektronischen Schlüssel (200) aufzuladen, wenn der elektronische Schlüssel (200) aufgenommen ist,
eine Kommunikationseinheit (340), die dazu eingerichtet ist, eine Nutzungshistorie von dem elektronischen Schlüssel (200) zu empfangen und ein auf der Grundlage der empfangenen Nutzungshistorie erzeugtes Nutzungsmuster an den elektronischen Schlüssel (200) zu senden, und
eine Lerneinheit (320), die dazu eingerichtet ist, das Nutzungsmuster auf der Grundlage der empfangenen Nutzungshistorie zu lernen.

## Revendications

1. Procédé d'authentification pour un dispositif de verrouillage électronique (100), comprenant :
la collecte d'un historique d'utilisation (S1100) de verrouillage et de déverrouillage d'un dispositif de verrouillage électronique (100) par une clé électronique (200) ;
la transmission, par la clé électronique, de l'historique d'utilisation à un dispositif d'analyse de schéma d'utilisation (300) ;
la génération, par le dispositif d'analyse de schéma d'utilisation (300), d'un schéma d'utilisation (S1200) en analysant l'historique d'utilisation ;
la transmission, par le dispositif d'analyse de schéma d'utilisation (300), du schéma d'utilisation généré à la clé électronique (200) ; et
l'exécution, par la clé électronique (200), d'une authentification (S1300) en appliquant un niveau d'authentification, parmi différents niveaux d'authentification comprenant une authentification en une étape, une authentification en deux étapes et une authentification en trois étapes, le niveau d'authentification étant sélectionné sur la base du schéma d'utilisation lorsque le dispositif de verrouillage électronique (100) doit être verrouillé et déverrouillé en utilisant la clé électronique (200) ;
dans lequel le dispositif de verrouillage électronique (100) est configuré pour être temporairement alimenté en puissance depuis une borne de connexion de la clé électronique (200) vers une borne de connexion du dispositif de verrouillage électronique (100) ; et
tous les niveaux d'authentification comprennent l'authentification en une étape réalisée par l'échange d'identifiants (UID) en contactant physiquement la borne de connexion de la clé électronique (200) et la borne de connexion du dispositif de verrouillage électronique (100).

2. Procédé d'authentification pour un dispositif de verrouillage électronique (100) selon la revendication 1, dans lequel la génération d'un schéma d'utilisation comprend :
l'analyse du schéma d'utilisation en utilisant un ou plusieurs parmi un temps d'utilisation et un lieu d'utilisation inclus dans l'historique d'utilisation.

3. Procédé d'authentification pour un dispositif de verrouillage électronique (100) selon la revendication 2, dans lequel l'analyse d'un schéma d'utilisation comprend :
le calcul d'une distribution normale du nombre d'utilisations à chaque temps d'utilisation en utilisant le nombre de verrous à chaque temps d'utilisation ; et
la sélection du niveau d'authentification en fonction d'une moyenne et d'un écart type de la distribution normale.

4. Procédé d'authentification pour un dispositif de verrouillage électronique (100) selon la revendication 2, dans lequel l'analyse d'un schéma d'utilisation comprend :
le calcul d'une distribution normale du nombre d'utilisations à chaque lieu d'utilisation en utilisant le nombre de verrous à chaque lieu ; et
la sélection du niveau d'authentification en fonction d'une moyenne et d'un écart type de la distribution normale.

5. Procédé d'authentification pour un dispositif de verrouillage électronique (100) selon l'une quelconque des revendications 3 et 4, dans lequel la sélection d'un niveau d'authentification comprend :
la sélection d'un premier niveau d'authentification lorsque le nombre d'utilisations est égal ou supérieur à une moyenne de la distribution normale - 1 * écart type ;
la sélection d'un deuxième niveau d'authentification supérieur au premier niveau d'authentification lorsque le nombre d'utilisations est égal ou supérieur à une moyenne de la distribution normale - 2 * écart type et inférieur à une moyenne de la distribution normale - 1 * écart type ; et
la sélection d'un troisième niveau d'authentification supérieur au deuxième niveau d'authentification lorsque le nombre d'utilisations est égal ou supérieur à une moyenne de la distribution normale - 3 * écart type et inférieur à une moyenne de la distribution normale - 2 * écart type.

6. Procédé d'authentification pour un dispositif de verrouillage électronique (100) selon la revendication 2, dans lequel l'analyse d'un schéma d'utilisation comprend :
le regroupement d'un historique d'utilisation en fonction du lieu et du temps ; et
l'application de différents niveaux d'authentification en fonction du lieu et du temps dans un regroupement regroupée.

7. Procédé d'authentification pour un dispositif de verrouillage électronique (100) selon la revendication 6, dans lequel le regroupement d'un historique d'utilisation en fonction du lieu et du temps comprend :
l'exécution d'un regroupement en K-moyennes en fonction du nombre de niveaux d'authentification.

8. Procédé d'authentification pour un dispositif de verrouillage électronique (100) selon la revendication 6, dans lequel l'application de différents niveaux d'authentification comprend :
l'application d'un niveau d'authentification ayant une sécurité élevée à un lieu et un temps dans le regroupement lorsque le nombre d'historiques d'utilisation dans le regroupement est inférieur.

9. Système d'authentification pour un dispositif de verrouillage électronique (100), comprenant un dispositif de verrouillage électronique (100), une clé électronique (200) et un dispositif d'analyse de schéma d'utilisation (300), dans lequel :
la clé électronique (200) est configurée pour collecter l'historique d'utilisation de verrouillage et de déverrouillage du dispositif de verrouillage électronique (100), et pour transmettre l'historique d'utilisation au dispositif d'analyse de schéma d'utilisation (300),
le dispositif d'analyse de schéma d'utilisation (300) est configuré pour analyser l'historique d'utilisation reçu, pour générer un schéma d'utilisation à la suite de l'analyse et pour transmettre le schéma d'utilisation généré à la clé électronique (200),
la clé électronique (200) est configurée pour recevoir le schéma d'utilisation et pour appliquer un niveau d'authentification sélectionné parmi différents niveaux d'authentification sur la base du schéma d'utilisation pour effectuer l'authentification, les niveaux d'authentification comprenant une authentification en une étape, une authentification en deux étapes et une authentification en trois étapes,
dans lequel le dispositif de verrouillage électronique (100) est configuré pour être temporairement alimenté en puissance depuis une borne de connexion de la clé électronique (200) vers une borne de connexion du dispositif de verrouillage électronique (100) ; et
dans lequel tous les niveaux d'authentification comprennent l'authentification en une étape, l'authentification en une étape étant réalisée par l'échange d'identifiants (UID) en contactant physiquement la borne de connexion de la clé électronique (200) et la borne de connexion du dispositif de verrouillage électronique (100).

10. Système d'authentification pour un dispositif de verrouillage électronique (100) selon la revendication 9, dans lequel le dispositif d'analyse de schéma d'utilisation (300) comprend :
une unité de logement configurée pour loger la clé électronique (200) ;
une unité de chargement configurée pour charger la clé électronique (200) lorsque la clé électronique (200) est logée ;
une unité de communication (340) configurée pour recevoir un historique d'utilisation de la clé électronique (200) et transmettre à la clé électronique (200) un schéma d'utilisation généré sur la base de l'historique d'utilisation reçu ; et
une unité d'apprentissage (320) configurée pour apprendre le schéma d'utilisation sur la base de l'historique d'utilisation reçu.
